# EUROPEAN PATENT APPLICATION

(11) **EP 1 349 111 A1**
(43) Date of publication of application: **01.10.2003**
(21) Application number: 02354050.3
(22) Date of filing: 27.03.2002
(51) Int. Cl.: G06N 5/00, G06F 9/44

(54) **Improvements in or relating to software**

(71) Applicant: Hewlett-Packard Company, Palo Alto, CA 94304 (US)
(72) Inventor: Dumont, Dominique, 38320 Eybens (FR)
(74) Representative: Lloyd, Richard Graham

(57) **Abstract**

The present invention provides a method of executing a software program which has a plurality of predetermined states, and can change from one state to another state by executing a function associated with each state. The method comprises determining a preferred execution path comprising a plurality of states linking the current state to an intended target state. The preferred execution path is followed by executing, for each state in the path, a function associated with that state. If it is determined that a deviation has occurred from the calculated preferred path the preferred execution path is recalculated.

By enabling the definition of a software program in a declarative way instead of the usual programmatic approach this advantageously the helps the modeling of software systems, especially for complex systems or where the systems have several execution paths. Subsequently, implementation of such systems can be achieved rapidly and with ease. Furthermore, maintenance, amendment and enhancement of the program code is also made easier.

## Description

### Field of the Invention

The present invention relates to the field of software programming and, more particularly, to modeling, creating and executing software programs.

### Background of the Invention

The creation of software programs is a complex process. If a software program is not carefully designed, written and tested it is possible that errors may be present in the software program. However, software programs, by their very nature, are generally required to perform highly complex processing tasks which means that the design and creation of such programs is in itself a complex task.

To facilitate the design of software programs there exist a multitude of software modeling techniques and tools which have been specially designed and developed to this end.

A common software modeling tool is the flow diagram. A flow diagram is a diagrammatic representation of the logical flow of a software program. A flow diagram typically comprises a number of program functions which are to be performed, linked together in the order in which they are to be performed. If-then-else type constructs are often used to alter the program flow depending on the outcome of a previous program function. Once the program flow is correctly designed in a flow diagram, the program source code can be manually created by carefully following and implementing the designed program flow.

One of the main problems with flow diagrams is that the program source code which is typically generated from a flow diagram is very linear in nature. Therefore, a change in the logical program flow in the flow diagram may require a corresponding change in the program source code, the position of which in the source code may be difficult to locate. Additionally, in software systems modeled by large flow diagrams, the resulting program source code is often large and unwieldy, containing large amounts of if-then-else or case-switch type constructs, making program maintenance cumbersome and problematic.

Another commonly used software modeling technique is the state machine. A state machine is a diagrammatic representation of the different states in which a software program can enter, linked together by external inputs or events which are required to cause the state machine to move from one state to another.

Although state machines are useful for modeling some software programs, problems can still arise in the generation of program source code which results therefrom. Depending on which techniques are used, the program source code may still result in linear code, similar in nature to that produced from using flow diagrams. Consequently, such program source code may have many of the same drawbacks. Other programming techniques may result in more modular source code, but generally result in at least some of the state linkage information, for example in the form of GOTO-type statements, being hard-coded and embedded in the program source code.

Similarly, if the linkage between different states is subsequently changed in the state machine, it can be particularly difficult to ensure that the program source code is modified in the corresponding manner. The simple changing of a link from one state to another state, may require substantial changes to the program source code. Such changes are not without hazard, since any substantial changes risk the introduction of errors or bugs into the program.

Furthermore, since most state machines are typically dedicated to server-type applications, with the state machine changing from state to state in response to external inputs or events, this somewhat passive behavior limits the types of software programs to which traditional state machines can be applied.

Accordingly, one aim of the present invention is to alleviate at least some of the above-mentioned problems.

### Summary of the Invention

According to a first aspect of the present invention there is provided a method of executing a software program which has a plurality of predetermined states, and can change from one state to another state by executing a function associated with each state. The method comprises determining a preferred execution path comprising a plurality of states linking the current state to an intended target state. The preferred execution path is followed by executing, for each state in the path, a function associated with that state. If it is determined that a deviation has occurred from the calculated preferred path the preferred execution path is re-determined.

By enabling the definition of a software program in a declarative way instead of the usual programmatic approach this advantageously the helps the modeling of software systems, especially for complex systems or where the systems have several execution paths. Subsequently, implementation of such systems can be achieved rapidly and with ease. Furthermore, maintenance, amendment and enhancement of the program code is also made easier.

Furthermore, each program function may advantageously return more than one return value, and each state is not limited to implementing only a single function for causing a transition to another state.

Additionally, by decoupling the program flow from the program function, a software program may be more easily created from a model, such as a state machine. Consequently, subsequent changes made in the program flow model may be easily made in the corresponding program source code, thereby facilitating maintenance of the program source code.

Preferably the preferred execution path is the path from the current state to the target state calculated using the Floyd-Warshall all-pairs shortest path algorithm.

The step of determining may further comprise determining a function associated with each of the states in the list of states execution of which can lead to the software program changing from the current state to the next state in the preferred path.

The step of determining may still further comprise determining a list of results expected as a result of the execution of each of the functions, wherein the state to which the software program changes as a result of execution of the function is dependent on the result of the function.

Preferably the step of determining the preferred execution path references a predefined definition of the relationship between the different states, functions and return results from the functions. Weighting coefficients may also be used which are taken into account when calculating the preferred path.

To prevent the program entering an endless loop the method may further comprise monitoring the number of times a loop of program states is entered, and stopping the program operation when the number of times exceeds a predefined number.

Also provided is a software program comprising a definition portion for defining a number of states in which the software program may enter, a function associated with each of the states, and associated linkage information indicating the state to which the software program should enter according to the result of an executed function. The software program also comprises a control logic for controlling the program flow of the software program such that the state of the program changes from a current state to a target state by: calculating a preferred path from the current state to the target state; executing functions associated with each step of the path along the preferred path, to thereby arrive at the target state; and recalculating the preferred path when it is determined that a deviation has occurred from the calculated preferred path.

### Brief Description of the Invention

An example embodying the invention will now be described, by way of non-limiting example, with reference to the accompanying drawings, in which:
Figure 1 is a diagram of an example state machine according to an embodiment of the present invention;
Figure 2 is a diagram of a further example state machine according to an embodiment of the present invention;
Figure 3 is a flow diagram according to an embodiment of the present invention; and
Figure 4 is a diagram showing a modified version of the state machine of Figure 1.

### Best Mode of Carrying out the Invention

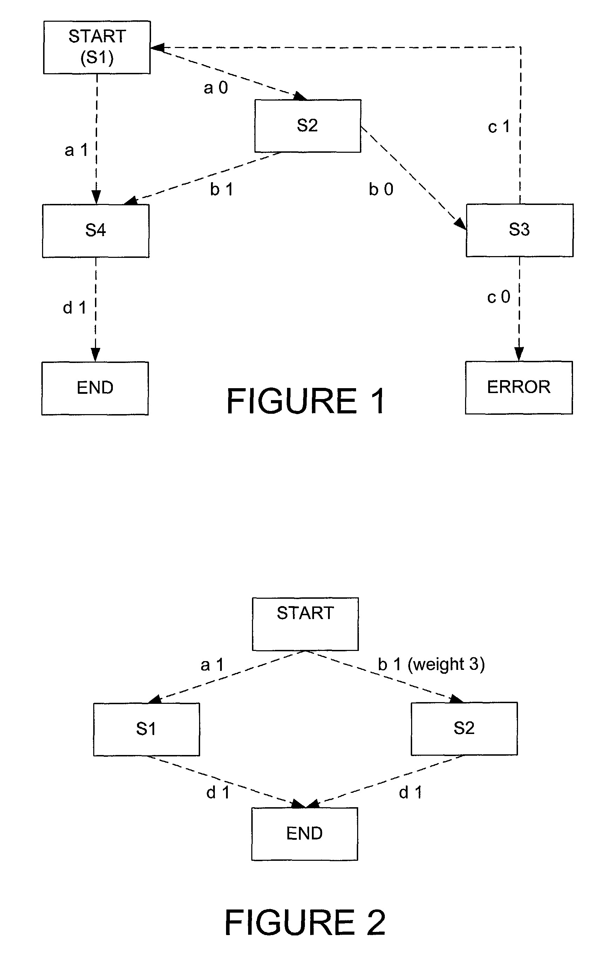

Figure 1 is a diagram of an example state machine according to an embodiment of the present invention, showing a number of different states which a particular software application may enter. The states shown in Figure 1 are 'START', S1, S2, S3, S4, 'END' and 'ERROR'. The transition from one state to another is determined not in response to an external input, as is the case in traditional state machines, but according to the result of a method invoked by the application, the result of the invoked method and an optional weighting coefficient (not shown). In the accompanying figures, the functions invoked to move from one state to another are illustrated in the form 'X n', where X is the function identifier, and n is the expected result from performing the function.

Consider the example shown in Figure 1 and the problem of how to go from the 'START' state to the 'END' state. For example, the 'START' state may represent the switching on of a computer system, and the 'END' state may represent a fully configured state of the computer system. There are other states which must be entered before arriving at the fully configured state, such as mounting of external drives, connecting to a network, and so on. From a user's point of view, the user wants to switch on the computer and would like the computer to arrive at the fully configured state, without requiring further user intervention. In such a system, any errors which occur will need to be dealt with so that the computer eventually arrives at the fully configured state or enters an unrecoverable error state.

Below is shown example pseudo code which could result from coding the state machine of Figure 1 using a linear programming approach, for example, as might be used for coding a convention flow diagram.

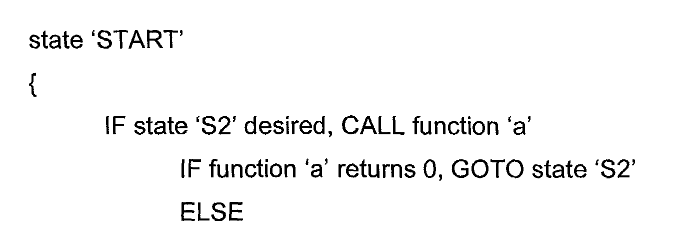

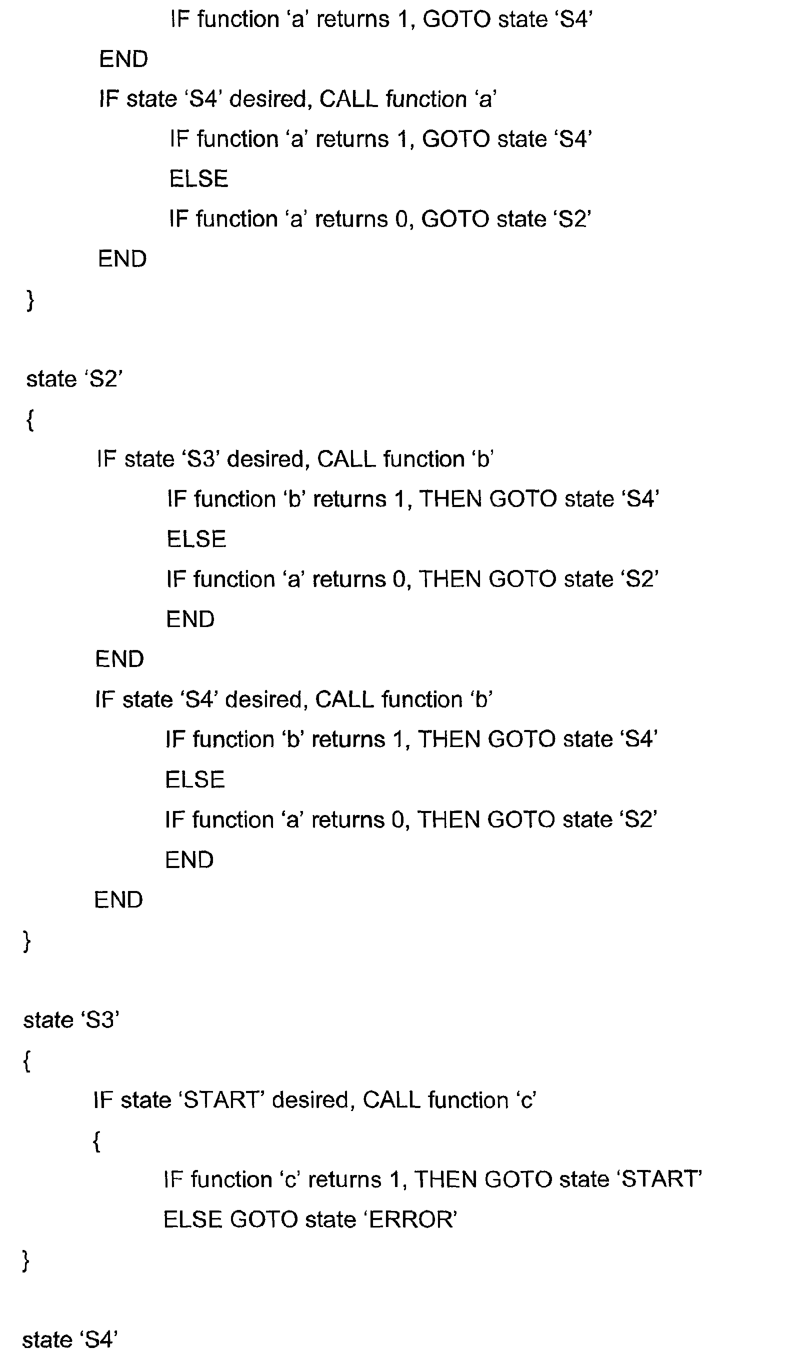

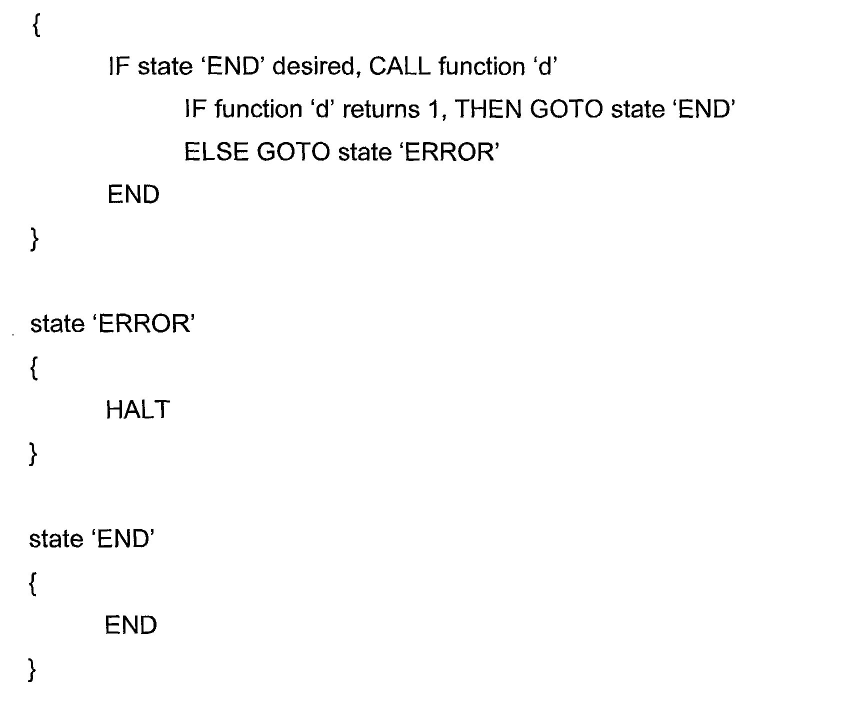

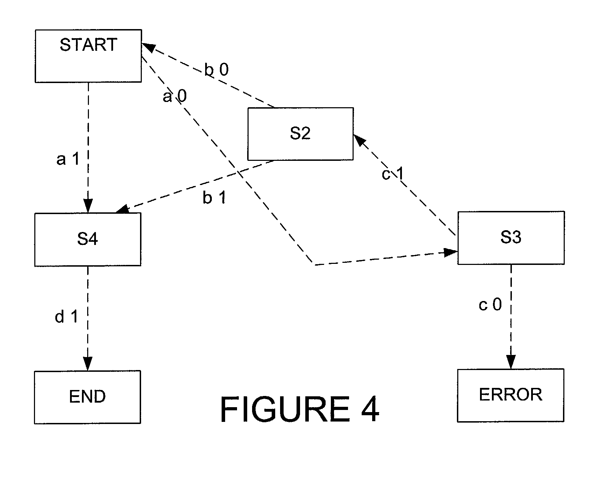

In the above pseudo code, the linkage of each state of the state machine is embedded in the state definition of each state. This means that if the state machine of Figure 1 is changed to, for example, that shown in Figure 4 the state definitions for each state affected by the change (i.e. states 'START', 'S2', and 'S3) will also have to be changed.

A disadvantage of using conventional coding processes is that the linkage information regarding the state machine is distributed throughout the state definitions in the actual program code. Thus, for an apparently minor change in the linkage of the state machine, substantial corresponding changes may be required in the both the pseudo-code and the program source code. For complex state machines, where many different functions can be executed from each state depending on the required state transition, the definition of each state becomes even more complex. Consequently, any changes in such a state machine is likely to have serious consequences at the pseudo and program source code level.

Due to the way in which the program flow is embedded into the actual program code it is very difficult to dynamically modify the program flow during execution of the program. This is one of the reasons why state machines have previously been used in passive, server-type applications.

Below is described, with reference to Figure 1, an embodiment in which state machines may be used in a dynamic environment.

In the present embodiment a path is computed between the current state, e.g. 'START', and the target state, i.e. 'END'. Preferably a preferred path is calculated using graph theory, for example using the Floyd-Warshall all-pairs shortest paths algorithm, or any other appropriate method, as will be appreciated by those skilled in the art. The preferred path calculation will determine, for example, which functions should be invoked or executed to change the program from the current state to the target state, as well as the expected return value from each function. In this example the calculated preferred path will therefore invoke method 'a' and will expect a result '1', since this will lead to a state transition to state S4. If the result of method 'a' does return a '1', the new state will be S4 and method 'd' will be invoked and will expect a result '1' which will lead to a state transition to the desired target state 'END'. If at any time the actual path deviates from the calculated preferred path, a new preferred path is calculated from the current state to the target state, and the new path is followed in the same manner.

Situations can arise, however, in which the state machine can enter an infinite loop. In the above example, this could occur if the results of functions a, b and c, are 0, 0 and 1 respectively. This would lead to an infinite loop around states 'START', S2 and S3. To avoid this situation a counter may be used to stop the program flow or generate an error should a predetermined number of loops be exceeded.

It is also possible that multiple paths to the target state exist, as is illustrated in Figure 2. In this case, it is desirable to include a weighting factor, as illustrated, to indicate a preference to a specific link. The weighting factor, if present, is used by the preferred path calculation to help determine the preferred path between a current state and the target state.

According to the present embodiment the various execution paths can be defined in a declarative way instead of the usual programmatic approach, as shown below. The linkage of the different states of the state machine may be defined in the form:

STATE, FUNCTION to invoke, STATE to go to if result = 0, STATE to go to if result = 1

Therefore, the state machine of Figure 1 can be defined as:
START, a, S2, S4;
S2, b, S3, S4;
S3, c, ERROR, START;
S4, d, NULL, END;

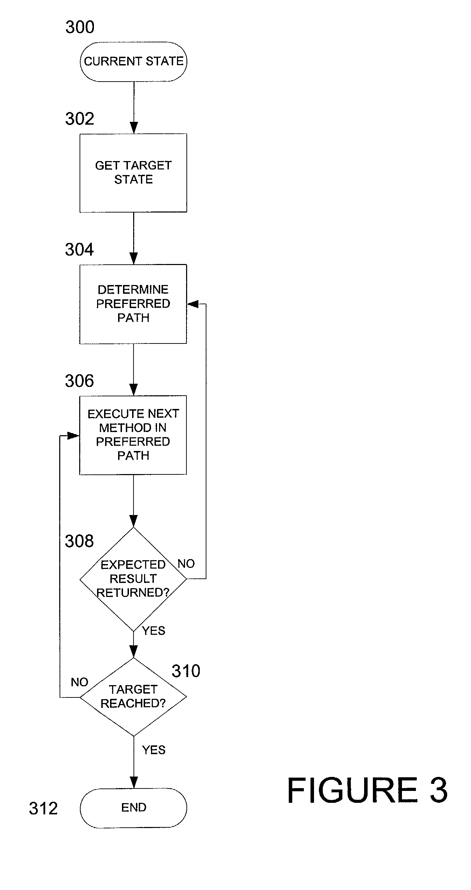

Using the above definition of the state machine, a generic control software program may be used to control the program flow of the state machine. Such a control software program is outlined in the flow diagram of Figure 3.

From the current state, the desired target state is determined, step 302, and the preferred path between the two states is determined as described above, step 304. The calculated preferred path comprises a list of each of the functions which need to be executed, and the expected results thereof which cause the ultimate transition from current state to the target state. For example, referring again to Figures 1 and 3, assume that the current state is 'START' and the target state is 'END'. The preferred path is determined, step 304, by using the above-described declarative definition of the state machine as:
START, a, S4, 1
S4, d, END, 1

In other words, from the current state 'START' execute method 'a', step 306, and, if the result is '1', step 308, go to state S4. Then, step 310, from state S4, execute method 'd', step 306, and, if the result is '1', go to state 'END', steps 308 and 310.

If, for any reason, the result of method 'a' is not '1', the state transition will be from state 'START' to state 'S2'. Since this is not part of the initially determined preferred path, step 308, the preferred path from the new current state to the target state must be re-determined, step 304, and the above described process is continued until the target state is arrived at. For example, in a computer system power-on state machine, if a function 'connect to network' is executed and the expected state is not 'connected to network', a function such as 'reset network card' may be executed to try and clear the problem, before again trying executing the function 'connect to network'.

Since the linkage of the different states is defined separately from the software control program, changes can be made in the definition of the state machine without requiring modifications to the software control program itself.

The creation of the software source code can be considered to divided into two distinct parts. The first is the creation of the functions or methods which link the different states of the state machine. The second is the definition of the linkages between the different states of the state machine. This information is then used by a generic software control program, such as that described in Figure 3.

The creation of the functions is obviously dependent on the precise nature of the functions required, and each function preferably provides a return value or values indicating the status of the executed method. However, it is the definition of the state linkages, which is maintained separately from the functions, which is particularly advantageous.

The following pseudo code, created using the process described above is shown below. It can be seen that the state definitions are decoupled from the linkage definitions.

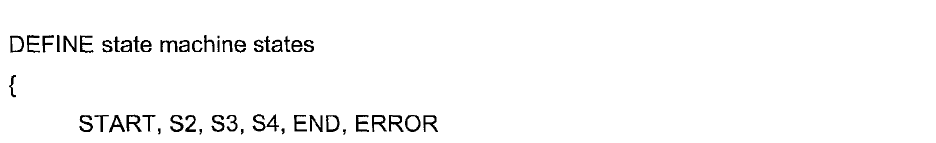

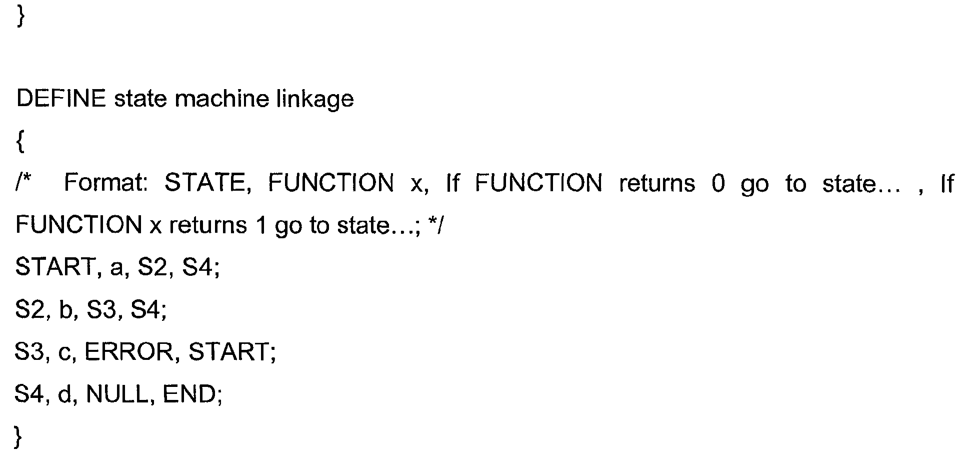

In this way, in order to change from the state machine of Figure 1 to that of Figure 4 would only require a new state machine linkage definition, as shown below.

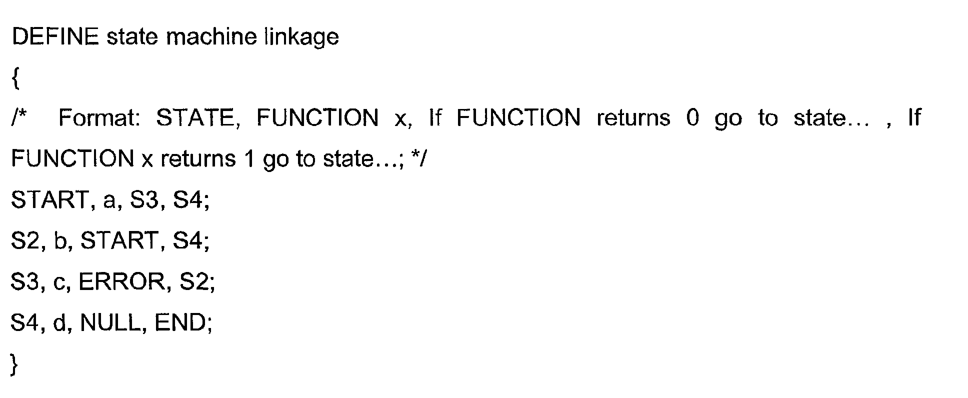

In this way, such changes are independent from the functions and software control program. This minimizes the risk of introducing errors into other parts of the software program code and thus increases the ease with which such programs can be created, and amended.

It should be appreciated that one way in which the above described techniques can be provided is in the form of an article of manufacture comprising a program storage medium having computer readable program code, for example, for use on general purpose computing systems.

### 50017849-EP

In the above description functions returning either one or two return values have been described. Those skilled in the art, however, will appreciate that functions returning a greater number of return values may also be used, with a different state transition resulting from each return value. Furthermore, it will be appreciated that it is also possible for states to be associated with more than one function, depending on requirements, without requiring any deviation from the inventive concepts described above.

## Claims

1. A method of executing a software program having a plurality of predetermined states, and wherein the software program can change from one state to another state by executing a function associated with each state, comprising:
determining a preferred execution path comprising a plurality of states linking the current state to an intended target state;
following the preferred execution path by executing, for each state in the path, a function associated with that state;
re-determining the preferred execution path when it is determined that a deviation has occurred from the calculated preferred path.

2. The method of claim 1, wherein the preferred execution path is the path from the current state to the target state calculated using the Floyd-Warshall all-pairs shortest path algorithm.

3. The method of claim 1 or 2, wherein the step of determining further comprises determining a function associated with each of the states in the preferred path execution of which can lead to the software program changing from the current state to the next state in the preferred path.

4. The method of claim 3, wherein the step of determining further comprises determining a list of results expected as a result of the execution of each of the functions, wherein the state to which the software program changes as a result of execution of the function is dependent on the result of the function.

5. The method of any preceding claim, wherein the step of determining the preferred execution path further comprises referencing a predefined definition of the relationship between the different states, functions and return results from the functions.

6. The method of claim 5, wherein the predefined definition further comprises weighting coefficients which are taken into account when calculating the preferred path.

7. The method of any preceding claim, further comprising monitoring the number of times a loop of program states is entered, and stopping the program operation when the number of times exceeds a predefined number, thereby preventing endless loops from being entered.

8. The method of any preceding claim, wherein each program state may be exited by executing one of a plurality of functions.

9. A software program operating in accordance with the method of any of claims 1 to 8.

10. A software program comprising:
a definition portion for defining a number of states in which the software program may enter,
a function associated with each of the states,
and associated linkage information indicating the state to which the software program should enter according to the result of an executed function;
and
a control logic for controlling the program flow of the software program such that the state of the program changes from a current state to a target state, by:
calculating a preferred path from the current state to the target state; executing functions associated with each step of the path along the preferred path, to thereby arrive at the target state; and
recalculating the preferred path when it is determined that a deviation has occurred from the calculated preferred path.
